# EUROPÄISCHE PATENTSCHRIFT

(11) **EP 1 470 363 B1**
(45) Veröffentlichungstag und Bekanntmachung des Hinweises auf die Patenterteilung: **04.05.2005**
(21) Anmeldenummer: 02787908.9
(22) Anmeldetag: 05.12.2002
(51) Int. Cl.: F16N 25/00, F16N 7/14

(54) **EINRICHTUNG ZUM VERSORGEN VON MEHREREN VERSORGUNGSSTELLEN, WIE SCHMIERSTELLEN**
DEVICE FOR SUPPLYING A PLURALITY OF SERVICE POINTS, SUCH AS LUBRICATING POINTS
DISPOSITIF POUR ALIMENTER PLUSIEURS POINTS D'ALIMENTATION, TELS QUE DES POINTS DE LUBRIFICATION

(30) Priorität: 02.02.2002 DE 10204245
(43) Veröffentlichungstag der Anmeldung: 27.10.2004
(73) Patentinhaber: Lincoln GmbH & Co. KG, 69190 Walldorf (DE)
(72) Erfinder: SCHMIDT, Hartmut, 69181 Leimen (DE)
(74) Vertreter: KEIL & SCHAAFHAUSEN
(86) Internationale Anmeldenummer: PCT/EP2002/013758
(87) Internationale Veröffentlichungsnummer: WO 2003/067143

(56) Entgegenhaltungen:
- FR-A- 2 041 227
- FR-A- 2 613 032
- GB-A- 1 570 009
- PATENT ABSTRACTS OF JAPAN vol. 012, no. 404 (M-757), 26. Oktober 1988 (1988-10-26) & JP 63 145894 A (KOWA KK), 17. Juni 1988 (1988-06-17)

## Beschreibung

Die Erfindung bezieht sich auf eine Einrichtung zum Versorgen von mehreren Schmierstellen oder anderen Versorgungsstellen, wie Schmierstellen, mit Schmierstoff oder dgl. viskosen Fördermedien mittels einer zentralen Pumpe.

Zur Versorgung von mehreren Maschinen oder Schmierstellengruppen über eine zentrale Pumpenstation mit einem viskosen Fördermedium, wie Schmierstoff, werden üblicherweise entweder Zweileitungssysteme oder Ejectorsektionsanlagen verwendet. Wie gezeigt zum Beispiel im FR 2041227. Dabei werden die Entfernungen zwischen den Maschinen und Schmierstellengruppen durch Leitungen verschiedener Dimensionen überbrückt. Bei Zweileitungsanlagen für Schmierstoff sind hierbei zwei Hauptleitungen und zusätzliche Absperrschieber vor Schmierstoffverteilem erforderlich. Bei Ejectorsektionsanlagen für Schmierstoff ist neben der Schmierstoffversorgungsleitung eine zusätzliche Antriebsluftleitung zu den einzelnen Ejectoren erforderlich, welche das Fördermedium, wie den Schmierstoff, volumetrisch dosieren. Zusätzlich wird je Ejector eine Steuer- und Wartungseinheit benötigt.

Aufgabe der vorliegenden Erfindung ist es, eine Fördermedium-, insbesondere Schmierstoffversorgungseinrichtung der eingangs genannten Art vorzuschlagen, welche einfacher im Aufbau und im Betrieb ist sowie funktionssicher arbeitet.

Diese Aufgabe wird z. B. dadurch gelöst, dass die Einrichtung mit einem Zweileitungsverteiler mit Kompressionsraum, einem dem Zweileitungsverteiler zugeordneten, z. B. ein 3/2-Wege-Ventil enthaltenden Anschlussblock, einer die Pumpe mit dem Anschlussblock verbindenden Versorgungsleitung, einer von der Versorgungsleitung abzweigenden Rückführungsleitung zu einem Fördermedienvorrat, wie Schmierstoffvorrat der Pumpe, einem 2/2-Wege-Ventil in der Rückführungsleitung sowie mit solchen Mitteln zur Steuerung ausgestattet ist, dass
- bei Beginn eines Zyklus die Pumpe zu fördern anfängt,
- gleichzeitig das 2/2-Wege-Ventil in der Rückführungsleitung geschlossen wird,
- während das 3/2-Wege-Ventil einen Durchgang von der Versorgungsleitung zu einer ersten Hauptleitung freigibt,
- durch den Druckaufbau in der ersten Hauptleitung der Zweiteitungsverteiler arbeitet, Fördermedium, wie Schmierstoff von einem Steuerkolben eines Fördermedium-, insbesondere Schmierstoffverteiler in den Kompressionsraum einer zweiten Hauptleitung gelangt sowie 50% der Versorgungsstellen, wie Schmierstellen mit Fördermedium, wie Schmierstoff versorgt werden,
- die Pumpe in Ruhestellung geht,
- das 2/2-Wege-Ventil geöffnet und dadurch die Versorgungsleitung und die erste Hauptleitung entlastet werden,
- ggf. nach Ablauf einer Pausenzeit die Pumpe wieder zu fördern anfängt,
- das 2/2-Wege-Ventil in der Rückführungsleitung wieder geschlossen wird,
- das 3/2-Wege-Ventil von der Versorgungsleitung zu der zweiten Hauptleitung schaltet,
- durch den Druckaufbau in der zweiten Hauptleitung der Zweileitungsverteiler in der entgegengesetzten Richtung wie zuvor arbeitet, Fördermedium, wie Schmierstoff von dem Steuerkolben des Fördermedium-, insbesondere Schmierstoffverteilers in den Kompressionsraum der ersten Hauptleitung gelangt sowie die zweiten 50% der Versorgungsstellen, wie Schmierstellen versorgt werden,
- die Pumpe in ihre Ausgangsruhestellung geht,
- das 2/2-Wege-Ventil geöffnet und dadurch die Versorgungsleitung und die zweite Hauptleitung wieder entlastet werden,
so dass der nächste Arbeitszyklus wie zuvor beginnen kann.

Zur sicheren Funktionsweise kann der Pumpe ein Druckschalter zugeordnet sein, welcher bei Erreichen eines vorgegebenen Druckes in der Versorgungsleitung die Pumpe in Ruhestellung versetzt, bis sie - z. B. nach Ablauf einer Pausenzeit - wieder zu fördern anfängt.

Zur Kontrolle der Funktionsweise der erfundenen Einrichtung kann der Förderkolben des Zweileitungsverteilers mit zwei Kontrollstiften versehen sein, welche z. B. mit Näherungsschaltern zusammenarbeiten.

Zur Erweiterung der Einrichtung ist es auch möglich, dem Zweileitungsverteiler wenigstens einen weiteren Zweileitungsverteiler in Reihe über die Hauptleitungen nachzuschalten.

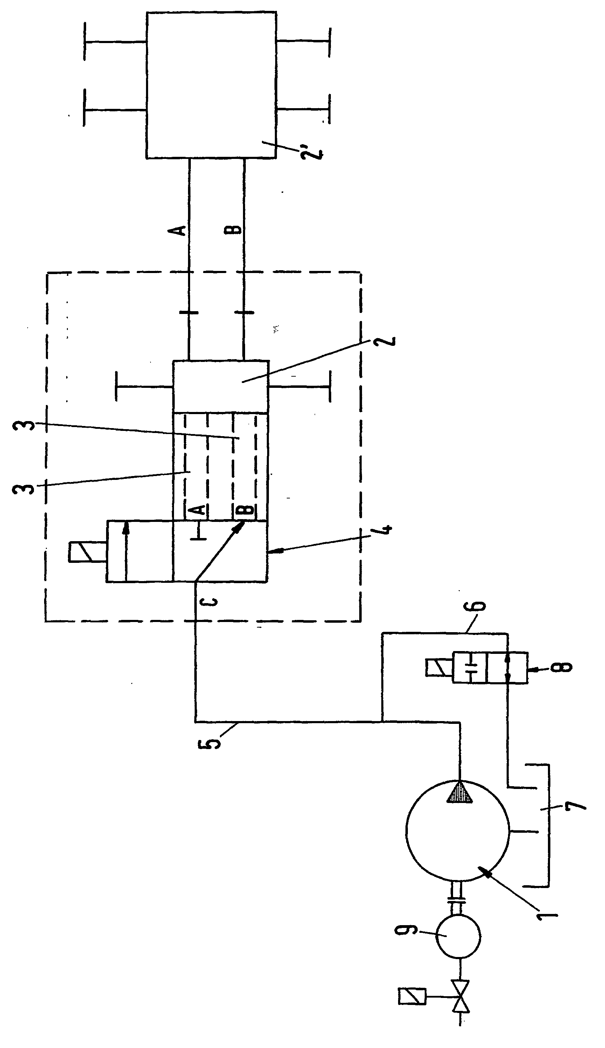

Weitere Merkmale, Vorteile und Anwendungsmöglichkeiten der Erfindung ergeben sich aus der nachfolgenden Beschreibung von Ausführungsbeispielen der Erfindung anhand der Zeichnung. Dabei bilden alle beschriebenen und/oder bildlich dargestellten Merkmale für sich oder in beliebiger Kombination den Gegenstand der Erfindung, auch unabhängig von deren Zusammenfassung in einzelnen Ansprüchen oder deren Rückbeziehung.

Die einzige Figur veranschaulicht schematisch eine die Erfindung aufweisende Schmierstoffversorgungseinrichtung.

Diese Einrichtung ist wie folgt aufgebaut:

Eine von einem Motor 9 angetriebene Pumpe 1 ist über eine z. B. viele Meter lange Versorgungsleitung 5 an einem Anschluss C eines ein 3/2-Wege-Ventil 4 enthaltenden Anschlussblockes eines Zweileitungsverteilers 2 angeschlossen. Das 3/2-Wege-Ventil 4 des Anschlussblockes ist so gestellt, dass zwei Hauptleitungen A, B einen Zweileitungsverteiler 2, z. B. über mehrere Meter Leitung, versorgen.

Von der Versorgungsleitung 5 zweigt im Bereich der Pumpe 1 eine Rückführungsleitung 6 ab, welche mit einem 2/2-Wege-Ventil 8 ausgestattet ist und in einen Schmierstoffvorrat 7 der Pumpe 1 mündet. In der Versorgungsleitung 5 bzw. der Rückführungsleitung 6 ist ein (nicht dargestellter) Druckschalter in Nachbarschaft der Pumpe 1 installiert.

Bei Beginn ist die Anlage druckentlastet, weil das 2/2-Wege-Ventil 8 an der Pumpe 1 stromlos geöffnet ist. Das 3/2-Wege-Ventil 4 im Anschlussblock des Zweileitungsverteilers 2 hat stromlos Durchgang von der Versorgungsleitung 5 und dem Anschluss C nach der Hauptleitung B. Nach Ablauf einer Pausenzeit beginnt die Pumpe 1 zu fördern. Gleichzeitig wird das 2/2-Wege-Ventil 8 an der Pumpe 1 geschlossen und das 3/2-Wege-Ventil 4 an dem Zweileitungsverteiler 2 von der Versorgungsleitung 5 nach Hauptleitung A geschaltet. Aufgrund des Druckaufbaus in der Versorgungsleitung 5 und der Hauptleitung A arbeitet der Zweileitungsverteiler 2, der Steuerschmierstoff gelangt hierbei in einen Kompressionsbereich der Hauptleitung B und 50% der an den Zweileitungsverteiler 2 angeschlossenen Schmierstellen werden mit Schmierstoff versorgt.

Bei hinreichendem Druckaufbau wird der Druckschalter an der Pumpe 1 aktiviert und die Pumpe 1 geht in Ruhestellung. Daraufhin wird das 2/2-Wege-Ventil 8 in der Rückführungsleitung 6 geöffnet, so dass die Hauptleitung A und die Versorgungsleitung 5 entlastet werden.

Nach erneutem Ablauf einer Pausenzeit beginnt die Pumpe 1 wieder zu fördern. Das 2/2-Wege-Ventil 8 an der Pumpe 1 schließt, das 3/2-Wege-Ventil 4 an dem Zweileitungsverteiler 2 schaltet von der Versorgungsleitung 5 nach der Hauptleitung B. Aufgrund des Druckaufbaus in der Versorgungsleitung 5 und der Hauptleitung B arbeitet der Zweileitungsverteiler 2 nun in entgegengesetzter Richtung wie zuvor: der Steuerschmierstoff gelangt hierbei in den Kompressionsraum der Hauptleitung A und die zweiten 50% der an den Zweileitungsverteiler angeschlossenen Schmierstellen werden versorgt.

Bei hinreichendem Druckaufbau wird der Druckschalter an der Pumpe 1 wiederum aktiviert, die Pumpe 1 geht in Ruhestellung, das 2/2-Wege-Ventil 2 an der Pumpe 2 öffnet und die Hauptleitung B mit der Versorgungsleitung 5 werden entlastet, so dass ein neuer Arbeitszyklus beginnen kann.

Der nicht dargestellte Förderkolben des Zweileitungsverteilers 2 ist z. B. mit zwei Kontrollstiften versehen, welche mit Näherungsschaltem überwacht werden können. Es ist auch möglich, dem ersten Zweileitungsverteiler 2 in Reihe über die Hauptleitungen A, B einen zweiten (und weitere) Zweileitungsverteiler 2' nachzuschalten.

Der Vorteil der erfindungsgemäßen Einrichtung gegenüber üblichen Zweileitungsanlagen besteht insbesondere in einem Wegfall einer zweiten Versorgungsleitung. Gegenüber Ejector-Anlagen wird eine vollständige Steuerleitung (Druckluftleitung) mit Wartungseinheit eingespart. Der Verbrauch an Steuermedium entfällt. Es kann mit höheren Drücken gefahren werden und es gibt vielfältige Dosiermögtichkeiten.

In allen Fällen ist die Montage der erfindungsgemäßen Einrichtung einfach, ihre Kosten an Material und Montage sind niedrig, es können altbewährte Standardkomponenten für ihren Aufbau verwendet werden.

Der Erfindungsgedanke ist nicht nur auf die Versorgung von Schmierstellen beschräkt; er ist ebenso anwendbar bei anderen viskosen Materialien (und nicht nur Schmierstoffen) und anderen Versorgungsstellen (und nicht nur Schmierstellen).

### Bezugszeichenliste

- 1: Pumpe
- 2, 2': Zweileitungsverteiler
- 3: Kompressionsraum
- 4: 3/2-Wege-Ventil
- 5: Versorgungsleitung
- 6: Rückführungsleitung
- 7: Schmierstoffvorrat
- 8: 2/2-Wege-Ventil
- 9: Motor

- A: erste Hauptleitung
- B: zweite Hauptleitung
- C: Anschluss

## Patentansprüche

1. Einrichtung zum Versorgen von mehreren Versorgungsstellen, wie Schmierstellen, mit Schmierstoff oder dgl. viskosen Fördermedien mittels einer zentralen Pumpe (1) und mit einem Zweileitungsverteiler (2) mit Kompressionsraum (3), einem dem Zweileitungsverteiler (2) zugeordneten, z. B. ein 3/2-Wege-Ventil (4) enthaltenden Anschlussblock (4), einer die Pumpe (1) mit dem Anschlussblock (4) verbindenden Versorgungsleitung (5), einer von der Versorgungsleitung (5) abzweigenden Rückführungsleitung (6) zu einem Fördermedienvorrat, wie Schmierstoffvorrat (7) der Pumpe (1), z. B. einem 2/2-Wege-Ventil (8) in der Rückführungsleitung (6), sowie mit solchen Mitteln zur Steuerung, dass
- bei Beginn eines Arbeitszyklus die Pumpe (1) zu fördern anfängt,
- gleichzeitig das 2/2-Wege-Ventil (8) in der Rückführungsleitung (6) geschlossen wird,
- während das 3/2-Wege-Ventil (4) einen Durchgang von der Versorgungsleitung (5) zu einer ersten Hauptleitung (A) frei gibt,
- durch den Druckaufbau in der ersten Hauptleitung (A) der Zweileitungsverteiler (2) arbeitet, Fördermedium, wie Schmierstoff von einem Steuerkolben eines Fördermedium-, insbesondere Schmierstoffverteilers in den Kompressionsraum (3) einer zweiten Hauptleitung (B) gelangt sowie 50% der Versorgungsstellen, wie Schmierstellen mit Fördermedium, wie Schmierstoff versorgt werden,
- die Pumpe (1) in Ruhestellung geht,
- das 2/2-Wege-Ventil (8) geöffnet und **dadurch** die Versorgungsleitung (5) und die erste Hauptleitung (A) entlastet werden,
- ggf. nach Ablauf einer Pausenzeit die Pumpe (1) wieder zu fördern anfängt,
- das 2/2-Wege-Ventil (8) in der Rückführungsleitung wieder geschlossen wird,
- das 3/2-Wege-Ventil (4) von der Versorgungsleitung (5) zu der zweiten Hauptleitung (B) schaltet,
- durch den Druckaufbau in der zweiten Hauptleitung (B) der Zweileitungsverteiler (2) in der entgegengesetzten Richtung wie zuvor arbeitet, Fördermedium, wie Schmierstoff von dem Steuerkolben des Fördermedium-, insbesondere Schmierstoffverteilers in den Kompressionsraum (3) der ersten Hauptleitung (A) gelangt sowie die zweiten 50% der Versorgungsstellen, wie Schmierstellen versorgt werden,
- die Pumpe (1) in ihre Ausgangsruhestellung geht,
- das 2/2-Wege-Ventil (8) geöffnet und **dadurch** die Versorgungsleitung (5) und die zweite Hauptleitung (B) wieder entlastet werden,
so dass der nächste Arbeitszyklus wie zuvor beginnen kann.

2. Einrichtung nach Anspruch 1, **dadurch gekennzeichnet, dass** der Pumpe (1) ein Druckschalter zugeordnet ist, welcher bei Erreichen eines vorgegebenen Druckes in der Versorgungsleitung (5) die Pumpe (1) in Ruhestellung versetzt.

3. Einrichtung nach Anspruch 1 oder 2, **dadurch gekennzeichnet, dass** der Förderkolben des Zweileitungsverteilers (2) mit wenigstens einem Kontrollstift versehen ist, welcher z. B. mit einem Näherungsschalter zusammenarbeitet.

4. Einrichtung nach einem der Ansprüche 1 bis 3, **dadurch gekennzeichnet, dass** dem Zweileitungsverteiler (2) wenigstens ein weiterer Zweileitungsverteiler (2') in Reihe über die Hauptleitungen (A, B) nachgeschaltet ist.

## Claims

1. A device for supplying a plurality of supply points, such as lubricating points, with lubricant or similar viscous pumping media by means of a central pump (1) and with a two-line distributor (2) with compression chamber (3), a connection block (4) associated with the two-line distributor (2) and including for example a 3/2-way valve (4), a supply line (5) connecting the pump (1) to the connection block (4), a return line (6) branching off from the supply line (5) to a pumping-medium supply, such as a lubricant supply (7), of the pump (1), for example a 2/2-way valve (8) in the return line (6), as well as with control means, such that
- at the beginning of a working cycle, the pump (1) starts to deliver,
- the 2/2-way valve (8) in the return line (6) is simultaneously closed,
- whilst the 3/2-way valve (4) opens up a passage from the supply line (5) to a first main line (A),
- due to the build-up of pressure in the first main line (A), the two-line distributor (2) operates, pumping medium, such as lubricant, is conveyed by a control piston of a pumping-medium distributor, in particular a lubricant distributor, into the compression chamber (3) of a second main line (B) and 50% of the supply points, such as lubricating points, are supplied with pumping medium, such as lubricant,
- the pump (1) moves into its resting position,
- the 2/2-way valve (8) is opened and thus the supply line (5) and the first main line (A) are relieved of pressure,
- as necessary, after an interval, the pump (1) starts to deliver again,
- the 2/2-way valve (8) in the return line is closed again,
- the 3/2-way valve (4) switches from the supply line (5) to the second main line (B),
- due to the build-up of pressure in the second main line (B), the two-line distributor (2) operates in the opposite direction to before, pumping medium, such as lubricant, is conveyed by the control piston of the pumping-medium distributor, in particular lubricant distributor, into the compression chamber (3) of the first main line (A) and the second 50% of the supply points, such as lubricating points, are supplied,
- the pump (1) moves into its initial resting position,
- the 2/2-way valve (8) is opened and thus the supply line (5) and the second main line (B) are again relieved of pressure,
so that the next working cycle can begin as before.

2. A device according to Claim 1, **characterized in that** associated with the pump (1) is a pressure switch, which moves the pump (1) into the resting position when a predetermined pressure is reached in the supply line (5).

3. A device according to Claim 1 or 2, **characterized in that** the delivery piston of the two-line distributor (2) is provided with at least one control pin, which cooperates for example with a proximity switch.

4. A device according to one of Claims 1 to 3, **characterized in that,** downstream of the two-line distributor (2), at least one additional two-line distributor (2') is connected in series by way of the main lines (A, B).

## Revendications

1. Dispositif pour alimenter plusieurs points d'alimentation, tels que des points de lubrification, en lubrifiant ou en autres produits visqueux pouvant être véhiculés semblables, au moyen d'une pompe centrale (1) et avec un distributeur à ligne double (2) avec chambre de compression (3), un bloc de raccordement (4), comprenant par exemple une valve à 3/2 voies (4), associé au distributeur à ligne double (2), une conduite d'alimentation (5) reliant la pompe (1) au bloc de raccordement (4), une conduite de reflux (6) qui dérive de la conduite d'alimentation (5) menant à un réservoir de produit pouvant être véhiculé, tel qu'un réservoir de lubrifiant (7) de la pompe (1), par exemple une valve à 2/2 voies (8) placée dans la conduite de reflux (6), et avec des moyens de commande tels que
- au début d'un cycle de travail, la pompe (1) commence à véhiculer,
- simultanément la valve à 2/2 voies (8) située dans la conduite de reflux (6) est fermée,
- tandis que la valve à 3/2 voies (4) libère un passage de la conduite d'alimentation (5) vers une première conduite principale (A),
- en raison de l'augmentation de la pression dans la première conduite principale (A) le distributeur à ligne double (2) travaille, du produit à véhiculer, tel que du lubrifiant passe d'un piston de commande d'un distributeur de produit à véhiculer, notamment un distributeur de lubrifiant, dans la chambre de compression (3) d'une deuxième conduite principale (B) et 50 % des points d'alimentation, tels que des points de lubrification, sont alimentés en produit à véhiculer, tel que du lubrifiant,
- la pompe (1) passe en position de repos,
- la valve à 2/2 voies (8) est ouverte et la conduite d'alimentation (5) et la première conduite principale (A) sont ainsi déchargées,
- la pompe (1) recommence à véhiculer, le cas échéant après une pause,
- la valve à 2/2 voies (8) située dans la conduite de reflux est refermée,
- la valve à 3/2 voies (4) relie la conduite d'alimentation (5) à la deuxième conduite principale (B),
- le distributeur à ligne double (2) travaille en direction opposée à la précédente en raison de l'augmentation de la pression dans la deuxième conduite principale (B), du produit à véhiculer, tel que du lubrifiant, passe du piston de commande du distributeur de produit à véhiculer, notamment du distributeur de lubrifiant, dans la chambre de compression (3) de la première conduite principale (A) et les deuxième 50 % des points d'alimentation, tels que des points de lubrification, sont alimentés,
- la pompe (1) retourne dans sa position de repos initiale,
- la valve à 2/2 voies (8) est ouverte et la conduite d'alimentation (5) et la deuxième conduite principale (B) sont ainsi à nouveau déchargées,
de telle sorte que le cycle de travail suivant peut commencer comme précédemment.

2. Dispositif selon la revendication 1, **caractérisé en ce qu'**un interrupteur manométrique est associé à la pompe (1) qui remet la pompe (1) en position de repos lorsqu'une pression prédéterminée est atteinte dans la conduite d'alimentation (5).

3. Dispositif selon la revendication 1 ou 2, **caractérisé en ce que** le piston de distribution du distributeur à ligne double (2) est muni d'au moins une tige de contrôle qui coopère par exemple avec un interrupteur de proximité.

4. Dispositif selon l'une des revendications 1 à 3, **caractérisé en ce que** le distributeur à ligne double (2) est raccordé en série à au moins un deuxième distributeur à ligne double (2') situé en aval de celui-ci par l'intermédiaire des conduites principales (A, B).
